# EUROPEAN PATENT APPLICATION

(11) **EP 3 236 543 A1**
(43) Date of publication of application: **25.10.2017**
(21) Application number: 15869817.5
(22) Date of filing: 04.12.2015
(51) Int. Cl.: H01R 35/02

(54) **FLEXIBLE LINKING TERMINAL AND ELECTRIC STORAGE MODULE**

(30) Priority: 19.12.2014 JP 2014257208
(71) Applicant: AutoNetworks Technologies, Ltd., Yokkaichi-shi, Mie 510-8503 (JP); Sumitomo Wiring Systems, Ltd., Yokkaichi-shi, Mie-ken 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); SAKATA Tomoyuki, Yokkaichi-shi Mie 510-8503 (JP); HIGASHIKOZONO Makoto, Yokkaichi-shi Mie 510-8503 (JP); NAKAGAWA Kenji, Yokkaichi-shi Mie 510-8503 (JP)
(74) Representative: Takeuchi, Maya
(86) International application number: PCT/JP2015/084120
(87) International publication number: WO 2016/098612

(57) **Abstract**

A flexible linking terminal (20) includes a braided wire (27) constituted by a plurality of metal wires and a plurality of terminals (21) that are spaced apart from each other and connected to the braided wire (27), and the terminals (21) each include a fixing portion (22) that is fixed to the braided wire (27) and a connection portion (24) that protrudes in a direction intersecting a direction in which the plurality of terminals (21) are lined up and that is connectable to an external portion.

## Description

### Technical Field

The present invention relates to a flexible linking terminal and an electricity storage module.

### Background Art

Conventionally known is technology in which a terminal is connected to an end portion of a braided wire. A braided wire equipped with a terminal metal fitting in Patent Document 1 is provided with a crimping portion obtained by gathering and welding metal wires at the end of the braided wire, and a barrel for a round terminal is crimped to the crimping portion.

### Citation List

### Patent Documents

Patent Document 1: JP 2014-11133A

### Summary of Invention

### Technical Problem

Incidentally, in Patent Document 1, since the crimping portion is formed by gathering the metal wires at the end of the braided wire, the crimping portion can be formed at only the end portion of the braided wire. Therefore, a terminal metal fitting cannot be formed at locations other than both end portions of the braided wire, and if the braided wire is connected to three or more locations, for example, the braided wires equipped with a plurality of terminal metal fittings need to be connected between electrodes, and this has been problematic in that the number of parts increases.

The present invention was made based on the above-described circumstances, and an object of the present invention is to provide a flexible linking terminal in which a plurality of terminals are linked, allowing the absorption of tolerances.

### Solution to Problem

A flexible linking terminal of the present invention includes a braided wire constituted by a plurality of metal wires and a plurality of terminals that are spaced apart from each other and connected to the braided wire, in which the terminals each include a fixing portion that is fixed to the braided wire and a connection portion that protrudes in a direction intersecting a direction in which the plurality of terminals are lined up and that is connectable to an external portion.

According to the flexible linking terminal having this configuration, since the connection portions for connection to the external portions protrude in the direction intersecting the direction in which the plurality of terminals are lined up, if the number of terminals is increased, a plurality of terminals that correspond to the number of counterparts can be fixed to the braided wire by fixing the fixing portions of the terminals to locations other than end portions of the braided wire. Also, flexibility for enabling positional shifting between terminals in accordance with tolerances to counterparts can be obtained due to the braided wire. Therefore, a plurality of terminals that correspond to the number of counterparts can be linked by the flexible linking terminal, allowing the absorption of tolerances.

An embodiment of the present invention preferably has the following aspects.
- The fixing portions are fixed to the braided wire by welding.
- The braided wire has a tubular shape, the side of the fixing portions on an overall circumference of the braided wire at positions corresponding to positions of the fixing portions is welded, whereas the side opposite to the fixing portions is not welded.

Accordingly, a tolerance absorption range can be increased because the side opposite to the fixing portions can be easily moved since only the side of the fixing portions on the overall circumference of the braided wire is welded.
- The fixing portions are fixed to the braided wire by crimping.
- The fixing portions are provided on both sides of the braided wire so as to hold the braided wire.

Accordingly, the fixing portions can strongly fix the braided wire on both sides, and thus the reliability of connection can be improved.
- An electricity storage module including a plurality of power storage elements each having a positive electrode and a negative electrode and the flexible linking terminal that is attached to the plurality of power storage elements and to which the electrodes and the terminals are connected.

Accordingly, tolerances between power storage elements can be absorbed and the plurality of electrodes can be connected by the braided wire of the flexible linking terminal.

### Advantageous Effects of Invention

According to the flexible linking terminal of the present invention, the plurality of terminals can be linked, allowing the absorption of tolerances.

### Brief Description of Drawings

FIG. 1 shows a plan view of an electricity storage module of Embodiment 1.
FIG. 2 shows a perspective view of a flexible linking terminal.
FIG. 3 shows a plan view of the flexible linking terminal.
FIG. 4 shows a cross-sectional view taken along A-A in FIG. 3.
FIG. 5 shows a right-side view of the flexible linking terminal.
FIG. 6 shows a perspective view of a flexible linking terminal of Embodiment 2.
FIG. 7 shows a plan view of the flexible linking terminal.
FIG. 8 shows a cross-sectional view taken along B-B in FIG. 7.
FIG. 9 shows a perspective view of a flexible linking terminal of Embodiment 3.
FIG. 10 shows a perspective view of a flexible linking terminal of Embodiment 4.
FIG. 11 shows a plan view of the flexible linking terminal.
FIG. 12 shows a cross-sectional view taken along C-C in FIG. 11.
FIG. 13 shows a perspective view of a flexible linking terminal of Embodiment 5.
FIG. 14 shows a plan view of the flexible linking terminal.
FIG. 15 shows a cross-sectional view taken along D-D in FIG. 14.
FIG. 16 shows a perspective view of a flexible linking terminal of Embodiment 6.
FIG. 17 shows a plan view of the flexible linking terminal.
FIG. 18 shows a cross-sectional view taken along E-E in FIG. 18.
FIG. 19 shows a right-side view of the flexible linking terminal.

### Description of Embodiments

### Embodiment 1

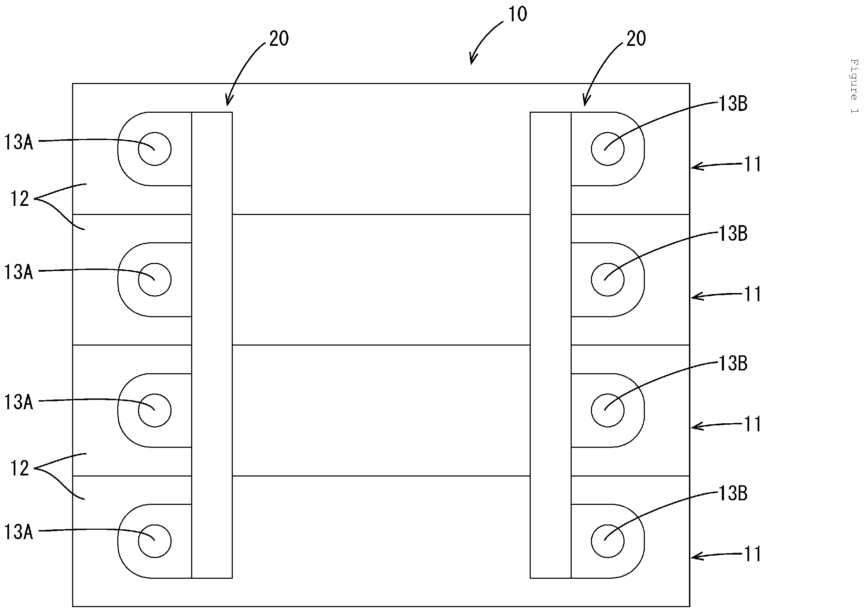

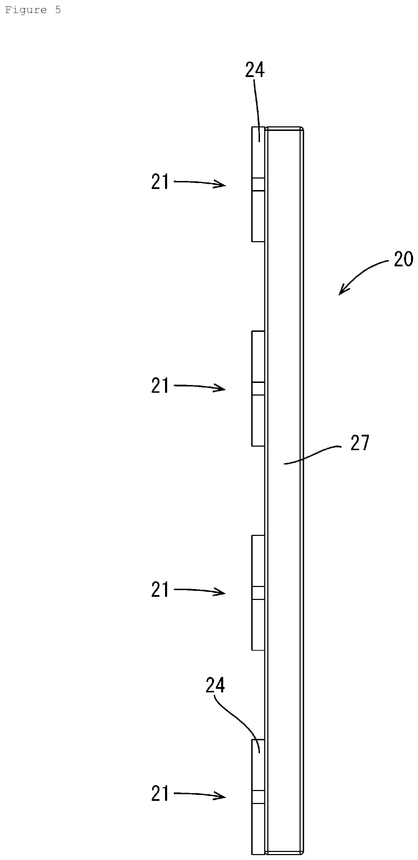

Embodiment 1 will be described with reference to FIGS. 1 to 5. An electricity storage module 10 on which a flexible linking terminal 20 is mounted is provided in a vehicle (not shown) such as an electric car or a hybrid car, and is used as a power source for driving the vehicle, for example.

### Electricity storage module 10

As shown in FIG. 1, the electricity storage module 10 includes a plurality of power storage elements 11 and flexible linking terminals 20 attached to upper surfaces of the plurality of power storage elements 11. The power storage elements 11 are batteries or capacitors, for example, and the inner portion of their flat and approximately rectangular parallelepiped main body 12 accommodates a power storage constituent (not shown). Electrodes 13A and 13B (the cathode is shown as 13A and the anode is shown as 13B) protrude upward from the upper surfaces of the power storage elements 11. The power storage elements 11 are disposed such that adjacent electrodes 13A and 13B have the same polarity. When the rows of the electrodes 13A and 13B are connected with a pair of flexible linking terminals 20, the plurality of power storage elements 11 are connected in parallel to each other. Power is output to the outside by connecting external electric wires (not shown) to any of the electrodes 13A or 13B of the flexible linking terminal 20.

### Flexible linking terminal 20

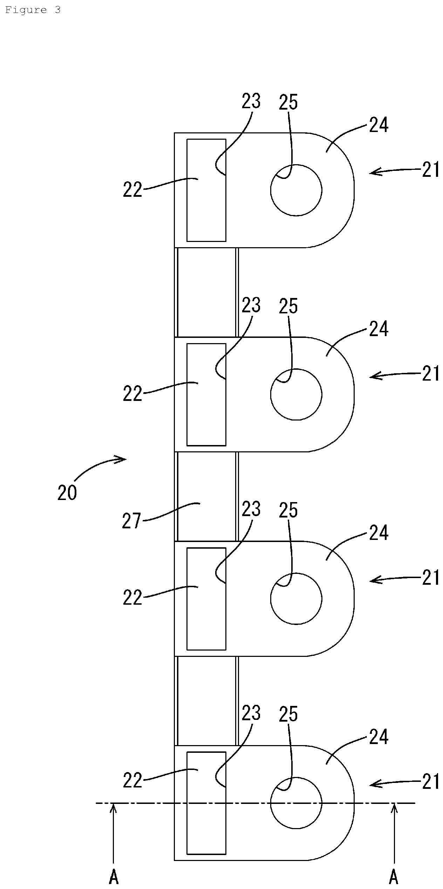

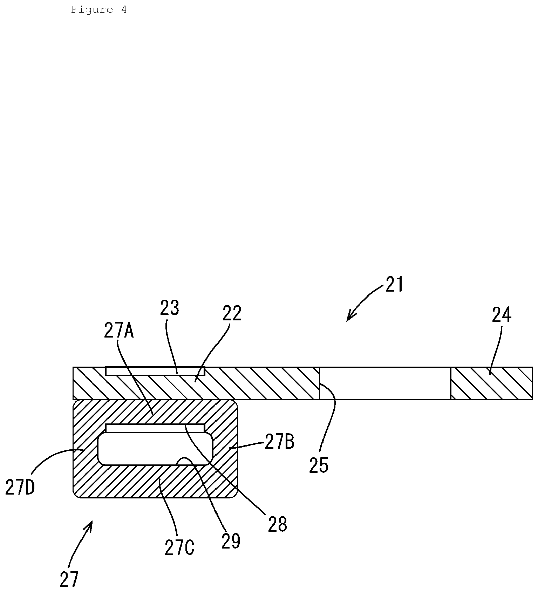

As shown in FIGS. 3 and 4, the flexible linking terminal 20 includes a braided wire 27 constituted by a plurality of metal wires and a plurality of terminals 21 that are spaced apart from each other and connected to the braided wire 27. The terminals 21 are round terminals, and made of copper, a copper alloy, aluminum, an aluminum alloy, or the like, for example. The terminals 21 each include a fixing portion 22 that is fixed to the braided wire 27 and a connection portion 24 that protrudes in the direction orthogonal to (rightward in FIG. 3; an example of "the direction intersecting the direction in which the terminals are lined up") the direction in which the terminals 21 are lined up (the vertical direction in FIG. 3) and is connectable to external electrodes 13A, 13B, and the like.

The fixing portion 22 is provided with a welding recess 23 that becomes rectangularly depressed due to heat and pressure during welding. Note that before welding the fixing portion 22 has the same flat plate shape as the connection portion 24. In the present embodiment, the fixing portions 22 and the braided wire 27 are welded by resistance welding. Note that the type of welding is not limited to resistance welding, and the fixing portions 22 and the braided wire 27 may also be connected by laser welding or ultrasonic welding. An insertion hole 25 into which the electrode 13A and 13B are insertable is formed through the connection portion 24.

The braided wire 27 is provided with an overall rectangular tubular shape by weaving multiple thin metal wires (bare metal wires) into a mesh, and has such flexibility and conductivity that the braided wire 27 can easily undergo flexural deformation and have electric conduction. The braided wire 27 has a sufficient thickness to be capable of transmitting the power for driving a vehicle, and a braided wire obtained by weaving bare soft copper wires, oxygen-free soft copper wires, and tin-plated soft copper wires can be used, for example. Also, the braided wire is not limited to a copper wire, and a braided wire obtained by weaving copper alloy wires, aluminum wires, aluminum alloy wires, or other metal wires may also be used.

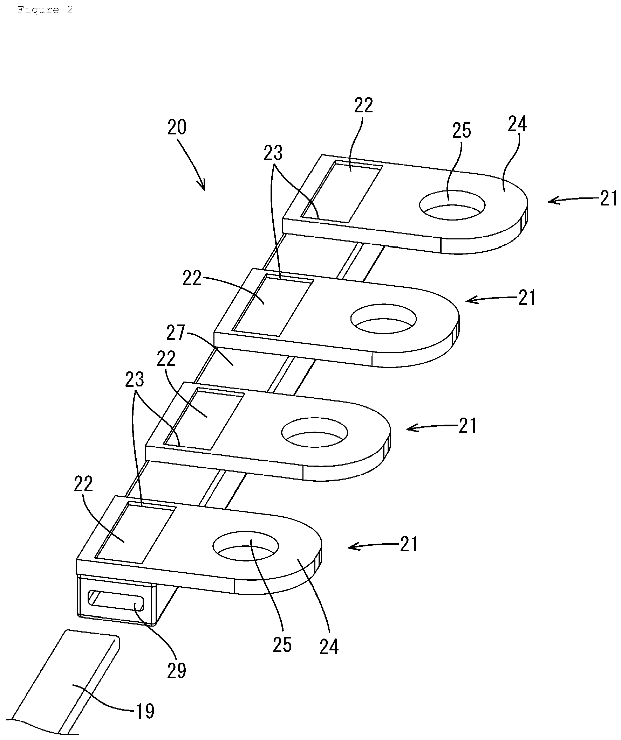

The inside of the braided wire 27 is a through hole 29 into which an insertion member 19 formed along the full length of the braided wire 27 is insertable. The through hole 29 has a rectangular cross section, and the belt-shaped insertion member 19 (see FIG. 2) is insertable into the through hole 29. The insertion member 19 is made of metal having a sufficient strength to withstand pressure during resistance welding, has substantially the same rectangular cross section as the through hole 29, and has a sufficient length to be insertable over the full length of the braided wire 27.

The braided wire 27 is provided with a rectangular tubular shape with joining surface portions 27A that are in contact with the fixing portions 22, facing surface portions 27C that face the joining surface portions 27A across a space, and linking surface portions 27B and 27D that link the joining surface portions 27A and the facing surface portions 27C. The joining surface portions 27A are welded to the fixing portions 22, and the facing surface portions 27C and the linking surface portions 27B and 27D are not welded to the fixing portions 22. The welding recesses 28 are formed in the welded portions of the facing surface portions 27C. These welding recesses 28 do not have flexibility and are solidified.

With a method for manufacturing the flexible linking terminal 20, a flexible linking terminal 20 in which a plurality of terminals 21 are linked by the braided wire 27 can be formed by inserting the insertion member 19 into the through hole 29 of the braided wire 27 over its full length, disposing the terminals 21 on the braided wire 27 at equal intervals, and performing resistance welding in which a metal mold is pressed against the fixing portions 22 and applying pressure and power to the insertion member 19. In this flexible linking terminal 20, the electrodes 13A and 13B are inserted into through holes 25 of the terminals 21 with the braided wire 27 being disposed on the terminals 21. When the flexible linking terminal 20 is attached to the plurality of power storage elements 11, the electricity storage module 10 is formed.

According to the present embodiment, the following functional effects and effects are obtained.

According to the flexible linking terminal 20 of the present embodiment, the connection portions 24 for connection to the external portions protrude in the direction orthogonal to (direction intersecting) the direction in which the plurality of terminals 21 spaced apart from each other are lined up, and thus if the number of terminals 21 is increased, a plurality of terminals 21 that correspond to the number of counterpart electrodes 13A and 13B can be fixed to the braided wire 27 by fixing the fixing portions 22 of the terminals 21 to locations other than the end portions of the braided wire 27. Also, flexibility for enabling positional shifting between terminals 21 in accordance with tolerances between counterpart power storage elements 11 can be obtained due to the braided wire 27. Therefore, a plurality of terminals 21 that correspond to the number of counterpart electrodes 13A and 13B can be linked by the flexible linking terminal 20, allowing the absorption of tolerances.

Also, the braided wire 27 has a tubular shape, and on the overall circumference of the braided wire 27 at positions corresponding to those of the fixing portions 22, the joining surface portions 27A (the side of the fixing portions 22) are welded and the facing surface portions 27C (the side opposite to the fixing portions 22) are not welded.

Accordingly, the side opposite to the fixing portions 22 is easily movable since only the side of the fixing portions 22 is welded on the overall circumference of the braided wire 27, and thus a tolerance absorption range can be increased. Also, since the braided wire 27 has a tubular shape, the strength of the braided wire 27 can be maintained and welding can be performed with an appropriate thickness, compared to the case where both the joining surface portions 27A and the facing surface portions 27C are welded.

Also, an electricity storage module 10 is provided that includes a plurality of power storage elements 11 each having a positive electrode 13A and a negative electrode 13B, and a flexible linking terminal 20 that is attached to the plurality of power storage elements 11 and to which the electrodes 13A and 13B and the terminals 21 are connected.

Accordingly, due to the braided wire 27 of the flexible linking terminal 20, adjacent electrodes 13A and 13B can be connected, while absorbing tolerances between power storage elements 11.

### Embodiment 2

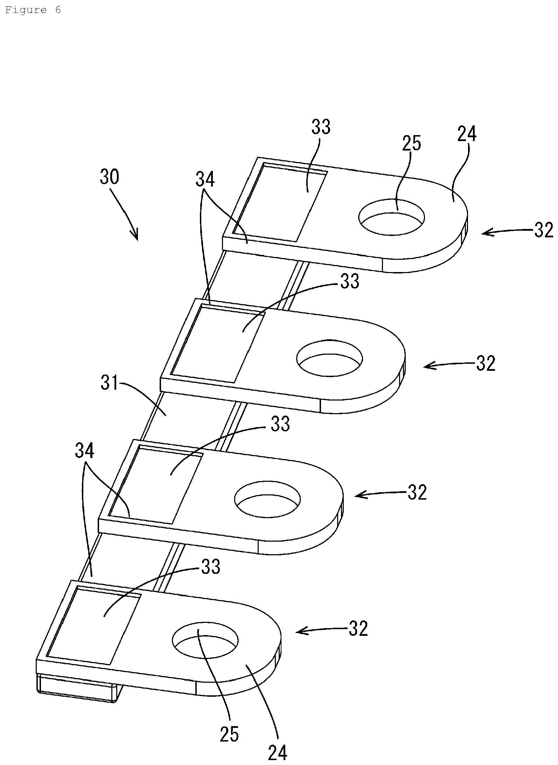

Next, Embodiment 2 will be described with reference to FIGS. 6 to 8. A flexible linking terminal 30 of Embodiment 2 is for linking a plurality of terminals 32 using a belt-shaped braided wire 31 that is provided with no through hole 29 of Embodiment 1. Hereinafter, structures that are the same as those of Embodiment 1 are given the same reference numerals, and their description will be omitted.

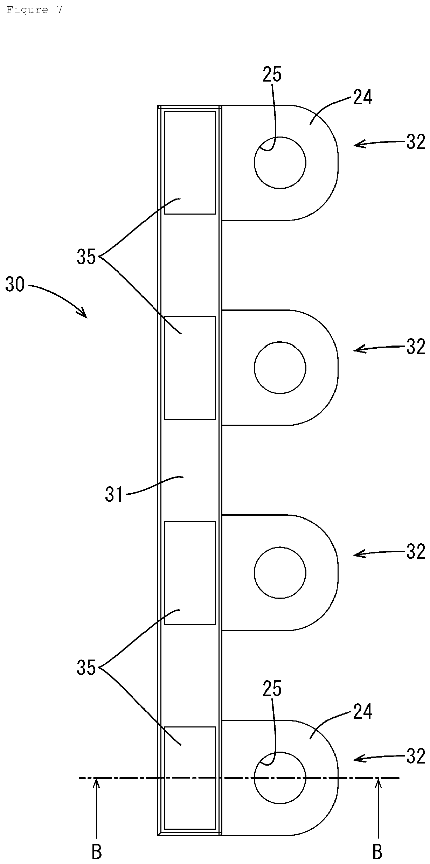

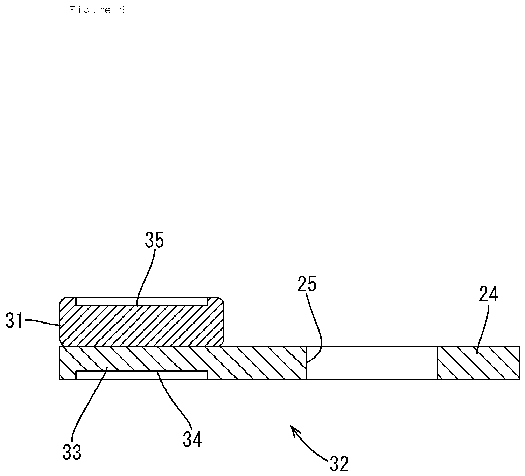

As shown in FIG. 8, a fixing portion 33 of the terminal 32 is provided with a welding recess 34 resulting from pressing and heating with a metal mold during welding. The terminal 32 is the same as the terminal 21 of Embodiment 1 before welding. The braided wire 31 of the flexible linking terminal 30 has a belt shape, extending in the direction (vertical direction in FIG. 7) in which the plurality of terminals 32 are lined up. The connection portion 24 protrudes with respect to the braided wire 31 extending in the direction in which the terminals 32 are lined up, in the direction orthogonal to the direction in which the terminals 32 are lined up (an example of "the direction intersecting the direction in which the terminals are lined up"). The braided wire 31 is provided with a welding recess 35 resulting from pressing and heating with a metal mold during welding.

### Embodiment 3

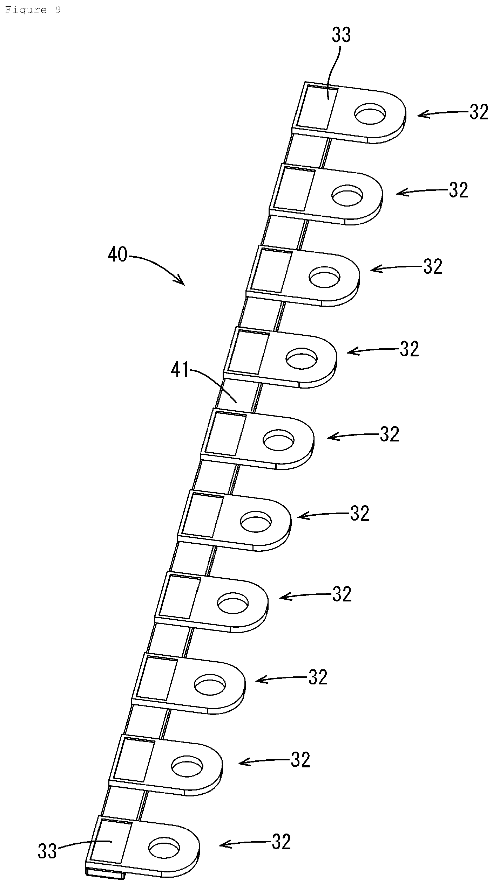

Next, Embodiment 3 will be described with reference to FIG. 9.

As shown in FIG. 9, in a flexible linking terminal 40 of Embodiment 3, a braided wire 41 is longer than the braided wire 27 of Embodiment 2, and accordingly, the number of terminals 32 is larger than that of Embodiment 2. The other structures are the same as those of Embodiment 2, and thus their description will be omitted.

According to Embodiment 3, the flexible linking terminal 40 in which a required number of terminals 32 are linked with the braided wire 41 can be formed by continuously welding the terminals 32 to the braided wire 41 and cutting the braided wire 41 as needed, and thus the number of terminals 32 can be changed easily.

### Embodiment 4

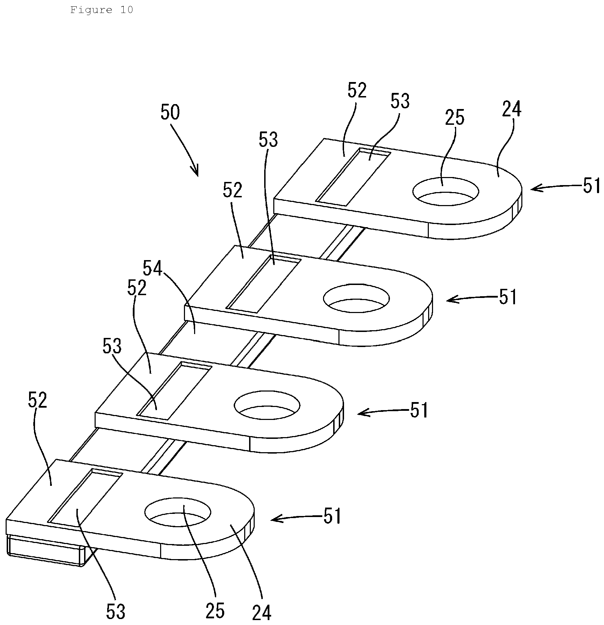

Next, Embodiment 4 will be described with reference to FIGS. 10 to 12. Structures that are the same as those of the above-described embodiments are given the same reference numerals, and their description will be omitted.

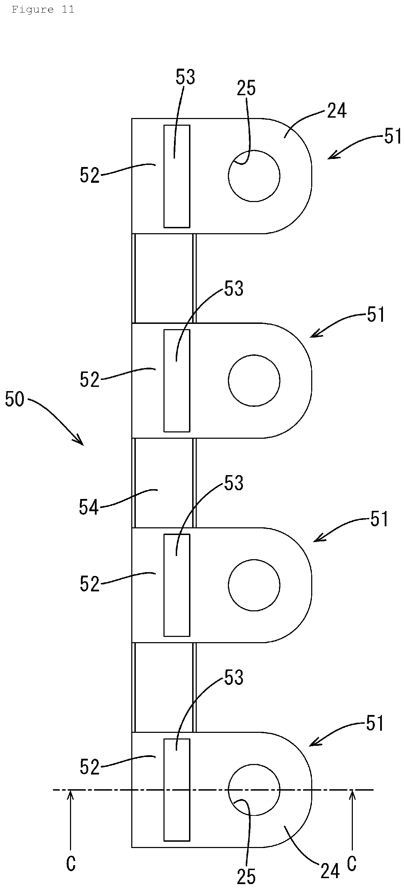

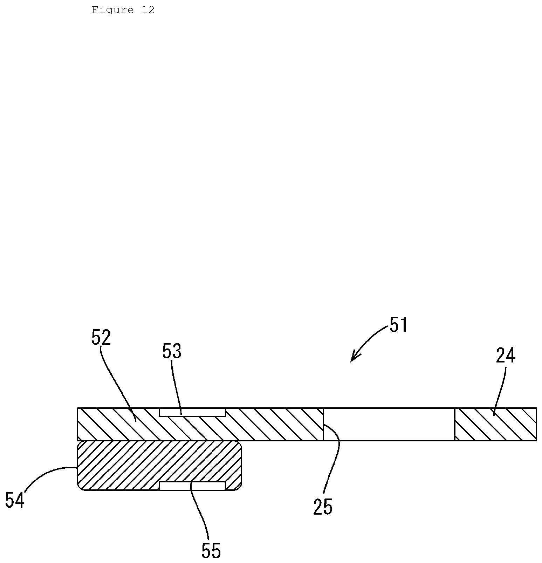

A flexible linking terminal 50 of Embodiment 4 is obtained by welding only half the areas of the fixing portions 22 and the braided wire 27 in Embodiment 2. Specifically, as shown in FIGS. 11 and 12, at the time of welding, in fixing portions 52 of the terminals 51, regions near the connection portions 24 are provided with welding recesses 53 resulting from pressing and heating only half the areas of the welding recesses 34 in Embodiments 2 and 3 with a metal mold, whereas in the braided wire 54, the regions near the connection portions 24 are provided, in correspondence with the welding recesses 53, with welding recesses 55 resulting from pressing and heating only half the areas of the welding recesses 35 in Embodiments 2 and 3 with a metal mold.

According to Embodiment 4, in the braided wire 27 overlapping with the fixing portions 52, portions that are not welded, i.e. portions other than the welding recesses 55 can be easily moved, and thus a tolerance absorption range can be increased.

### Embodiment 5

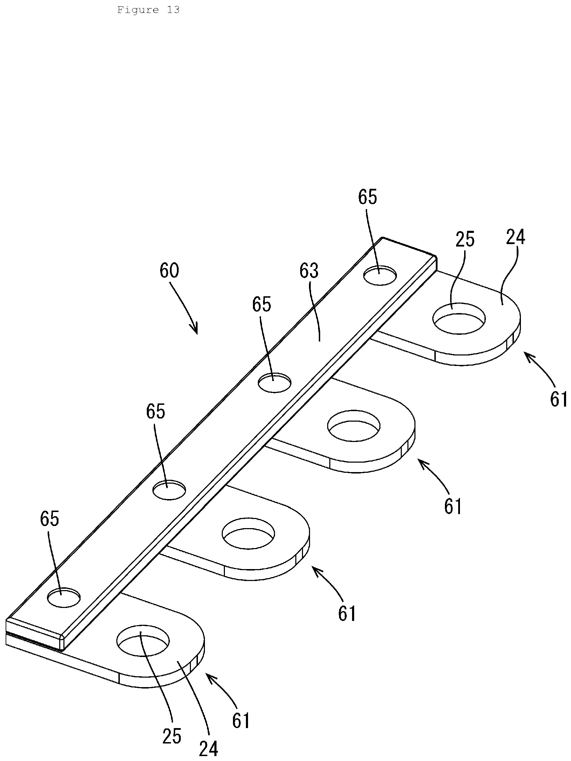

Next, Embodiment 5 will be described with reference to FIGS. 13 to 15. Structures that are the same as those of the above-described embodiments are given the same reference numerals, and their description will be omitted. The shape of a welding portion in a flexible linking terminal 60 of Embodiment 5 is a spot shape.

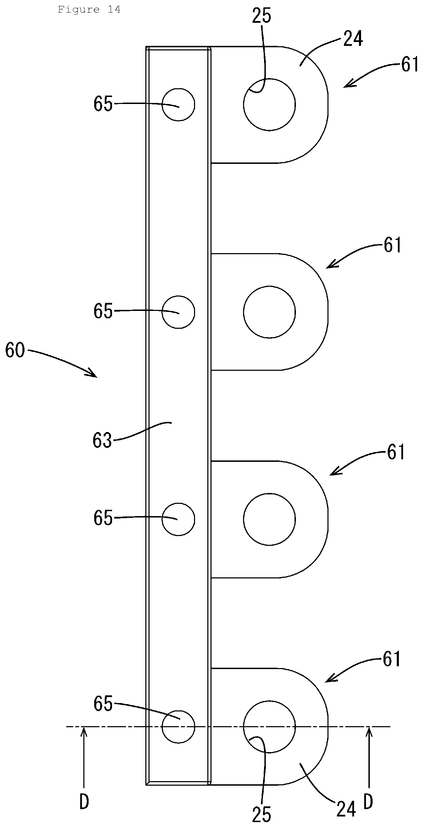

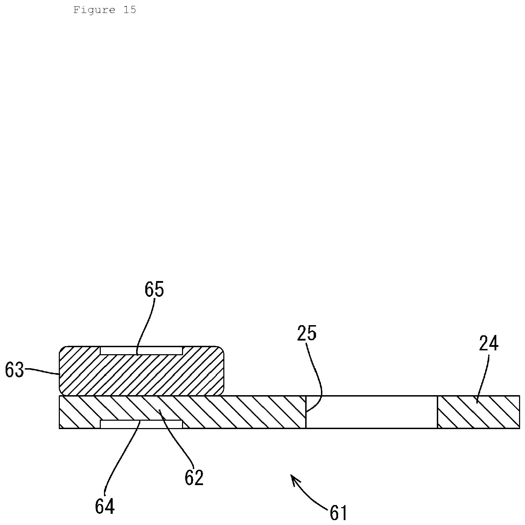

As shown in FIGS. 14 and 15, fixing portions 62 of terminals 61 and a braided wire 63 are held with upper and lower tips having circular pressing surfaces and subjected to spot welding. Accordingly, the outer surfaces of the fixing portions 62 are provided with circular welding recesses 64 resulting from pressing and heating with a metal mold during welding, and the outer surface of the braided wire 63 is provided with circular welding recesses 65 resulting from pressing and heating with a metal mold during welding.

According to Embodiment 5, in the braided wire 63 overlapping with the fixing portions 62, portions that are not welded can be easily moved, and thus a tolerance absorption range can be increased.

### Embodiment 6

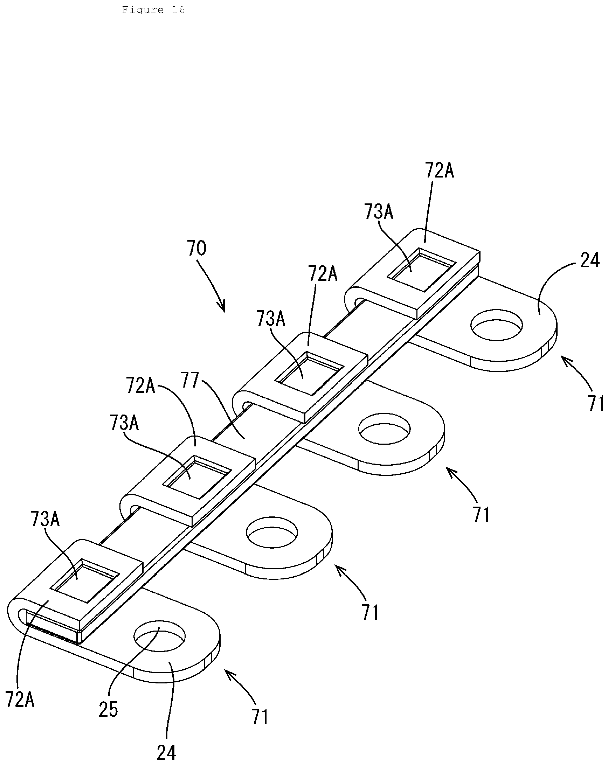

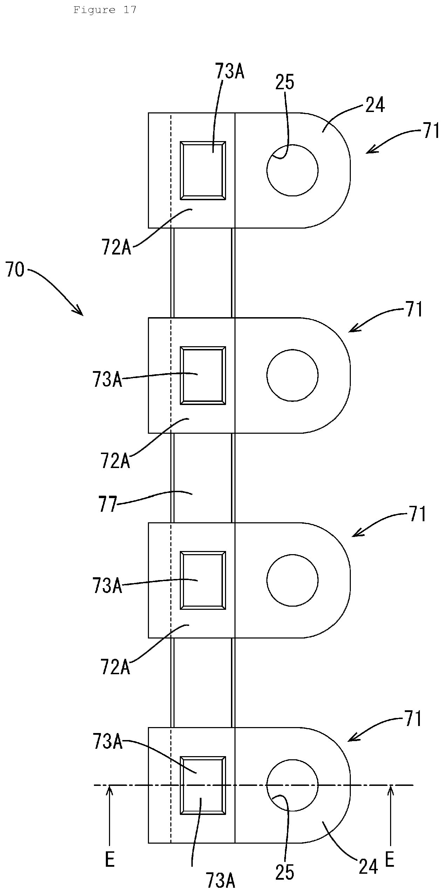

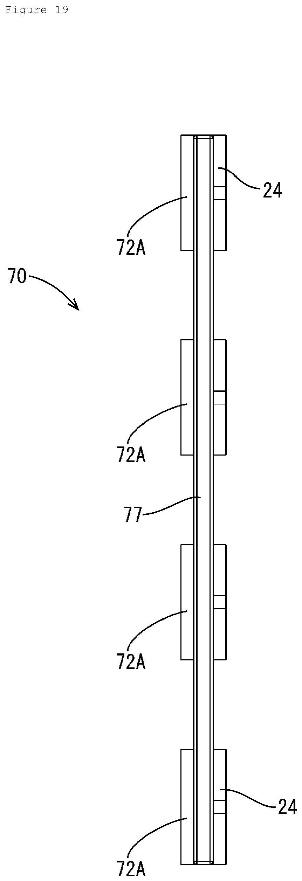

Next, Embodiment 6 will be described with reference to FIGS. 16 to 19. A flexible linking terminal 70 of Embodiment 5 is obtained by crimping a plurality of terminals 71 that are spaced apart from each other to a braided wire 77 extending in a belt shape.

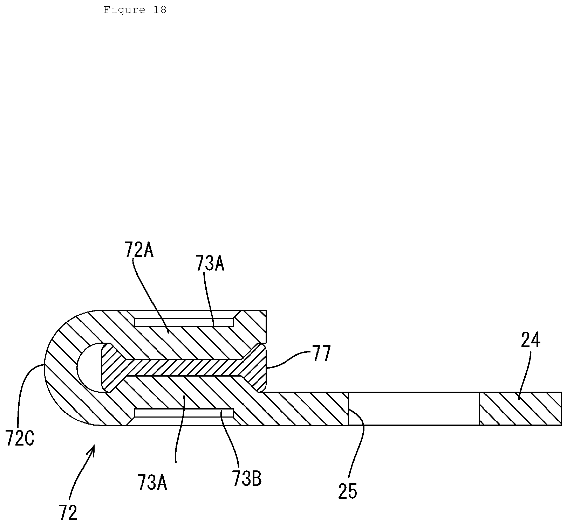

As shown in FIG. 18, the terminals 71 each include a fixing portion 72 disposed so as to hold the braided wire 77 from the top and the bottom, and a connection portion 24 that is connected to an external portion. The fixing portion 72 includes a pair of facing portions 72A and 72B and a U-shaped linking portion 72C that links the facing portions 72A and 72B. The outer surfaces of the facing portions 72A and 72B are provided with crimping recesses 73A and 73B formed by applying pressure.

In a method for manufacturing the flexible linking terminal 70, the braided wire 77 is inserted from the connection portion 24 side between the facing portions 72A and 72B of the terminals 21, and the sides opposite to the crimping recesses 73A and 73B enter the braided wire 27 by crimping the facing portions 72A and 72B with a metal mold, and the fixing portions 72 are fixed to the braided wire 77.

According to Embodiment 6, since the braided wire 27 can be strongly fixed from both sides by the fixing portions 72, the reliability of connection can be increased.

### Other Embodiments

The present invention is not merely limited to the embodiments described above using the foregoing description and drawings, and embodiments such as the following are also encompassed in the technical scope of the present invention.
(1) The number of terminals 21 and the length of the braided wire 27 are not limited to the number and the length of the above-described embodiments, and may be changed as appropriate. Also, the shape of the terminal is not limited to round, and may be changed to various shapes.
(2) Although the terminals 21 are disposed at equal intervals in the above-described embodiments, the terminals 21 may also be disposed at non-equal intervals.
(3) Although in the terminals 21, 32, 51, 61, and 71, the connection portions 24 protrude in the direction orthogonal to the direction in which the terminals are lined up (the direction in which the braided wires 27, 31, 41, 54, and 77 extend), there is no limitation to this, and the connection portions 24 may protrude in a direction that intersects the direction in which the braided wires 27, 31, 41, 54, and 77 extend. Also, the plurality of terminals are not limited to terminals whose connection portions 24 protrude in the same direction, and may also protrude in opposite directions. For example, terminals whose connection portions 24 protrude in one direction orthogonal to the direction in which the braided wire extends, and terminals whose connection portions 24 protrude in the direction opposite to that direction may be disposed alternately.

### Reference Signs List

10 Electricity storage module
11 Power storage element
13A, 13B Electrode
19 Insertion member
20, 30, 40, 50, 60, 70 Flexible linking terminal
21, 32, 51, 61, 71 Terminal
22, 33, 52, 62, 72 Fixing portion
24 Connection portion
27, 31, 41, 54, 77 Braided wire

## Claims

1. A flexible linking terminal comprising:
a braided wire constituted by a plurality of metal wires; and
a plurality of terminals that are spaced apart from each other and connected to the braided wire,
wherein the terminals each include:
a fixing portion that is fixed to the braided wire, and
a connection portion that protrudes in a direction intersecting a direction in which the plurality of terminals are lined up and that is connectable to an external portion.

2. The flexible linking terminal according to claim 1,
wherein the fixing portions are fixed to the braided wire by welding.

3. The flexible linking terminal according to claim 2,
wherein the braided wire has a tubular shape, the side of the fixing portions on an overall circumference of the braided wire at positions corresponding to positions of the fixing portions is welded, whereas the side opposite to the fixing portions is not welded.

4. The flexible linking terminal according to claim 1,
wherein the fixing portions are fixed to the braided wire by crimping.

5. The flexible linking terminal according to claim 4,
wherein the fixing portions are provided on both sides of the braided wire so as to hold the braided wire.

6. An electricity storage module comprising:
a plurality of power storage elements each having a positive electrode and a negative electrode; and
the flexible linking terminal according to any one of claims 1 to 5 that is attached to the plurality of power storage elements and to which the electrodes and the terminals are connected.
